# EUROPÄISCHE PATENTSCHRIFT

(11) **EP 3 165 309 B1**
(45) Veröffentlichungstag und Bekanntmachung des Hinweises auf die Patenterteilung: **20.06.2018**
(21) Anmeldenummer: 16195882.2
(22) Anmeldetag: 27.10.2016
(51) Int. Cl.: B23B 31/26

(54) **SPANNVORRICHTUNG**
CLAMPING DEVICE
DISPOSITIF DE SERRAGE

(30) Priorität: 06.11.2015 DE 102015119061
(43) Veröffentlichungstag der Anmeldung: 10.05.2017
(73) Patentinhaber: Ott-Jakob Spanntechnik GmbH, 87663 Lengenwang (DE)
(72) Erfinder: Greif, Josef, 87496 Friesenried (DE); Mohr, Peter, 87487 Wiggensbach (DE); Reisacher, Bartholomäus, jun., 86807 Buchloe (DE)
(74) Vertreter: Charrier Rapp & Liebau

(56) Entgegenhaltungen:
- DE-A1-102011 116 818
- DE-B3-102004 051 031

## Beschreibung

Die Erfindung betrifft eine Spannvorrichtung zum Spannen eines Werkstücks oder eines Werkzeugs bzw. einer Werkzeugaufnahme an einem Maschinenteil einer Werkzeugmaschine nach dem Oberbegriff des Anspruchs 1. Die Erfindung betrifft außerdem eine Bearbeitungseinheit einer Werkzeugmaschine mit einer derartigen Spannvorrichtung.

Werkzeugmaschinen oder Bearbeitungszentren weisen in der Regel eine in deren Arbeitsspindel integrierte Spannvorrichtung zum automatischen Spannen und Lösen von Bearbeitungswerkzeugen auf. Bei den bekannten Spannvorrichtungen werden die Bearbeitungswerkzeuge durch einen in der Arbeitsspindel angeordneten Spannsatz gehalten, der am vorderen Ende einer durch eine Federanordnung vorgespannten Spannstange angeordnet ist. Der Spannsatz enthält üblicherweise mehrere radial bewegliche Zangenelemente, durch welche das Bearbeitungswerkzeug in die Arbeitsspindel eingezogen wird. Zum Lösen der Bearbeitungswerkzeuge wird die Spannstange durch eine so genannte Löseeinheit entgegen der Kraft der Federanordnung verschoben, so dass der Spannsatz mit den Zangenelementen geöffnet wird und das Bearbeitungswerkzeug freigibt.

Aus der DE 10 2004 051 031 B3 ist eine derartige Spannvorrichtung bekannt. Bei dieser Spannvorrichtung ist die Federanordnung als Tellerfederpaket mit einer Vielzahl aneinandergereihter Tellerfedern ausgeführt. Derartige Tellerfederpakete weisen jedoch eine relativ große Masse und aufgrund ihrer hohen Belastung auch nur eine begrenzte Lebensdauer auf. Außerdem ist die Montage solcher Tellerfederpakete mit einem relativ großen Aufwand verbunden.

Aufgabe der Erfindung ist, eine Spannvorrichtung und eine Bearbeitungseinheit mit einer derartigen Spannvorrichtung zu schaffen, bei denen die zur Erzeugung der Spann- oder Einzugskraft verwendete Federanordnung kompakt aufgebaut und einfach montierbar ist.

Diese Aufgabe wird durch eine Spannvorrichtung mit den Merkmalen des Anspruchs 1 und durch eine Bearbeitungseinheit mit den Merkmalen des Anspruchs 13 gelöst. Zweckmäßige Weiterbildungen und vorteilhafte Ausgestaltungen der Erfindung sind in den Unteransprüchen angegeben.

Bei der erfindungsgemäßen Spannvorrichtung weist die zur Erzeugung der Spann- bzw. Einzugskraft des Spannsatzes verwendete Federanordnung mindestens eine Federeinheit mit mehreren zwischen einer ersten und zweiten Federaufhahme angeordneten, biegsamen Federelementen auf, wobei die ersten und zweiten Federaufnahmen gegenüber der Zugstange gegen Verdrehung gesichert sind. Die Federeinheit mit den einzelnen Federelementen und den zugehörigen Federaufhahmen kann als kompakte Einheit vorgefertigt und einfach montiert werden. Sie kann als Einheit einfach auf die Spannstange aufgesetzt werden, wodurch die Montage und eine eventuelle Demontage erheblich vereinfacht wird.

In einer zweckmäßigen Ausführungsform kann die Federeinheit als Knickstabfeder mit mehreren in Umfangrichtung voneinander beabstandeten und mit ihren Enden in den Federaufhahmen fest oder gelenkig gelagerten, stabförmigen Federelementen ausgebildet sein. Die stabförmigen Federelemente können aus Metall oder einem Faserverbundwerkstoff hergestellt sein.

Die Federanordnung weist in einer weiteren vorteilhaften Ausführung mehrere in Reihe angeordnete Federeinheiten auf, die auch gegeneinander gegen Verdrehung gesichert sind. Durch eine geeignete Auswahl oder Zusammenstellung mehrerer Federeinheiten können die gewünschten Federeigenschaften auf einfache Weise verändert und an die jeweiligen Anforderungen angepasst werden.

Eine gegen Verdrehung gesicherte Verbindung zwischen der Federeinheit und der Zugstange kann z.B. dadurch erreicht werden, dass die erste Federaufhahme ein z.B. als Sicherungsstift ausgebildetes Sicherungselement enthält. Das an der ersten Federaufnahme angeordnete Sicherungselement kann z.B. in die Spannstange oder ein auf der Spannstange verdrehgesichert angeordnetes Anlageelement formschlüssig eingreifen. Das als Stift oder dgl. ausgebildete Sicherungselement kann in einer Bohrung an einer Stirnseite der ersten Federaufhahme angeordnet sein. Die zweite Federaufhahme kann eine Innenkontur zum formschlüssigen Eingriff mit einer entsprechenden Außenkontur der Zugstange enthalten. In einer möglichen Ausführung kann die Innenkontur an der zweiten Federaufhahme durch einen Durchgang mit zwei parallelen Flächen und die entsprechende Außenkontur der Spannstange durch Abflachungen an einem schlankeren vorderen Teil der Spannstange gebildet sein. Auch andere zueinander passende Konturen zur formschlüssigen Verbindung sind möglich.

Um eine ungleichmäßige Komprimierung mehrerer hintereinander angeordneter Federeinheiten zu vermeiden, kann die Axialverschiebung mindestens einer Federaufhahme relativ zur Spannstange beim Zusammendrücken der mindestens einen Federeinheit durch einen Anschlag begrenzt werden. Der Anschlag kann z.B. durch eine Anschlagfläche eines hülsenförmigen Anlageteils an einem auf der Spannstange gegen Verdrehung gesichert angeordneten Anlageelement und /oder durch eine Anschlagfläche an einen mittleren Teil der Spannstange gebildet sein. Dadurch kann gewährleistet werden, dass nicht nur eine der Federeinheiten zusammengedrückt wird.

Die Löseeinheit, durch welche der Spannsatz entgegen der Federanordnung in die Lösestellung bewegbar ist, kann hydraulisch, pneumatisch oder elektrisch betätigt werden. Bei einer elektrischen Betätigung kann auf gesonderte Hydraulik- bzw. Pneumatikaggregate und auch auf aufwändige Dichtungsmaßnahmen verzichtet werden. Der elektrische Antrieb kann ein Motor sein, dessen Stator und Rotor in einem Gehäuse der Löseeinheit untergebracht sind.

Die Erfindung betrifft außerdem eine Bearbeitungseinheit einer Werkzeugmaschine, bei der die vorstehend beschriebene Spannvorrichtung in eine Arbeitsspindel oder ein anderes Maschinenteil integriert ist.

Vorzugsweise handelt es sich bei dem Maschinenteil um eine drehbar gelagerte und durch einen Antrieb drehbare Arbeitsspindel.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Bearbeitungseinheit einer Werkzeugmaschine mit einer Spannvorrichtung in einem Längsschnitt;
- **Figur 2**: eine Seitenansicht einer in der Spannvorrichtung von Figur 1 verwendeten Federeinheit in einem nicht komprimierten Zustand;
- **Figur 3**: eine Seitenansicht der Federeinheit von Figur 2 in einem komprimierten Zustand;
- **Figur 4**: eine Spannstange mit zwei Federeinheiten in einem Längschnitt;
- **Figur 5**: einen Querschnitt entlang der Linie M-M von Figur 4;
- **Figur 6**: einen Querschnitt entlang der Linie L-L von Figur 4;
- **Figur 7**: einen Querschnitt entlang der Linie K-K von Figur 4;
- **Figur 8**: einen Querschnitt entlang der Linie J-J von Figur 4;
- **Figur 9**: eine Schnittansicht entlang der Linie N-N von Figur 5;
- **Figur 10**: eine Schnittansicht entlang der Linie O-O von Figur 8 und
- **Figur 11**: eine Detailansicht der Spannstange mit den Federeinheiten.

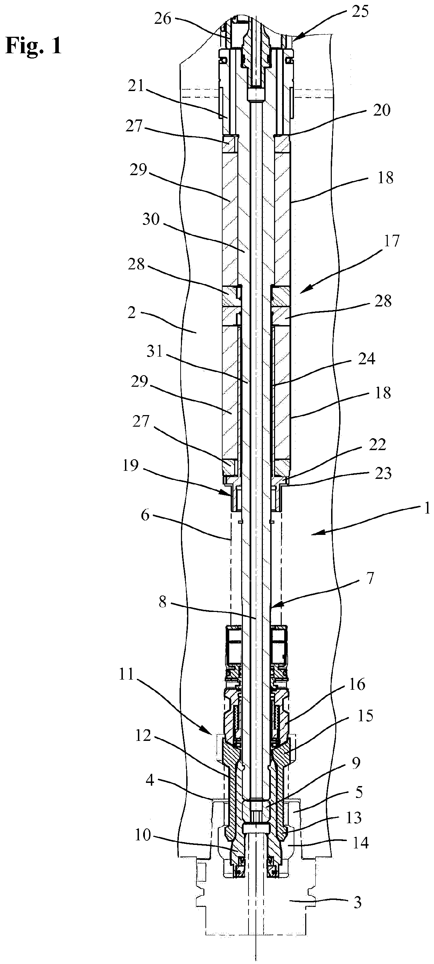

In Figur 1 ist eine Bearbeitungseinheit einer Werkzeugmaschine mit einer in einem Maschinenteil 2 integrierten Spannvorrichtung 1 zum Spannen eines Werkstücks oder Werkzeugs bzw. einer Werkzeugaufnahme 3 schematisch dargestellt. Bei der gezeigten Ausführung ist das nur zum Teil dargestellte Maschinenteil 2 eine innerhalb eines Spindelgehäuses drehbar gelagerte und durch einen Antrieb rotatorisch angetriebene Arbeitsspindel, die an ihrem in Figur 1 unten angeordneten äußeren Ende einen Innenkegel 4 für die Aufnahme eines hier als Hohlschaftkegel ausgebildeten Werkzeugkegels 5 der Werkzeugaufnahme 3 oder eines Fräsers, Bohrers bzw. eines anderen Bearbeitungswerkzeugs enthält. Über die Spannvorrichtung 1 kann auch ein während der Bearbeitung rotierendes Werkstück gespannt werden. Das Maschinenteil 2 kann außerdem auch ein Bearbeitungstisch oder dgl. sein, in dem die Spannvorrichtung 1 zum Spannen eines Werkstücks oder Werkzeugs eingebaut ist.

Die Spannvorrichtung 1 enthält eine innerhalb einer Durchgangsöffhung 6 des Maschinenteils 2 axial verschiebbare Spannstange 7, die bei der gezeigten Ausführung mit einer Durchgangsbohrung 8 für die Zuführung eines Kühlschmiermittels zur Werkzeugaufhahme 3 bzw. zum Werkzeug versehen ist. An dem zur Werkzeugaufhahme 3 weisenden vorderen Ende 9 der Spannstange 7 ist ein Spannkonus 10 eines an sich bekannten Spannsatzes 11 befestigt ist. Der Spannsatz 11 enthält eine um den Spannkonus 10 angeordnete Spannzange mit mehreren Zangenelementen 12, die durch axiale Verschiebung des Spannkonus 10 zur Klemmung bzw. Freigabe des Werkzeugkegels 5 radial beweglich sind.

Die Zangenelemente 12 des Spannsatzes 11 greifen mit ihren äußeren Enden 13 in eine Ringnut 14 der Werkzeugaufhahme 3 ein. Mit ihren inneren Enden 15 sind die Zangenelemente 12 an einer Stützhülse 16 abgestützt. Die Spannstange 7 wird durch eine um diese konzentrisch angeordnete Federanordnung 17 nach hinten vorgespannt. Die bei der gezeigten Ausführung aus zwei im Folgenden noch näher erläuterten Federeinheiten 18 bestehende Federanordnung 17 ist an der einen Seite an einem innerhalb des Maschinenteils 2 abgestützten buchsenförmigen Anlageelement 19 und an der anderen Seite an einem Ringbund 20 am verbreiterten hinteren Ende 21 der Spannstange 7 abgestützt. Das Anlageelement 19 liegt über einen Ringflansch 22 an einem inneren Ringabsatz 23 der Durchgangsöffhung 6 des hier als Arbeitsspindel ausgebildeten Maschinenteils 2 an und weist ein in Richtung des hinteren Endes 21 der Spannstange 7 verlaufendes hülsenförmiges Anlageteil 24 auf.

An dem von der Werkzeugaufhahme 3 abgewandten hinteren Ende 21 der Spannstange 7 ist eine Löseeinheit 25 angeordnet, durch welche die Spannstange 7 entgegen der Kraft der Federanordnung 17 nach vorne gedrückt werden kann. Die Löseeinheit 25 enthält eine an dem hinteren Ende 21 der Spannstange 7 anliegende Druckhülse 26, die durch einen hydraulischen, pneumatischen oder auch elektrischen Antrieb verschoben werden kann. Wenn die Spannstange 7 mit Hilfe der Löseeinheit 25 in Richtung der Werkzeugaufnahme 3 gedrückt wird, gibt der am vorderen Ende der Arbeitsspindel 6 angeordnete Spannsatz 11 den Werkzeugkegel 5 der Werkzeugaufnahme 3 bzw. Werkzeugs frei. Wird dagegen die Spannstange 7 durch die Kraft der Federanordnung 17 wieder nach hinten gezogen, wird der Werkzeugkegel 5 in das Maschinenteil 2 eingezogen und geklemmt. Der Aufbau und die Funktionsweise des Spannsatzes 11 sind als solche bekannt, so dass hier auf die ausführliche Beschreibung verzichtet werden kann.

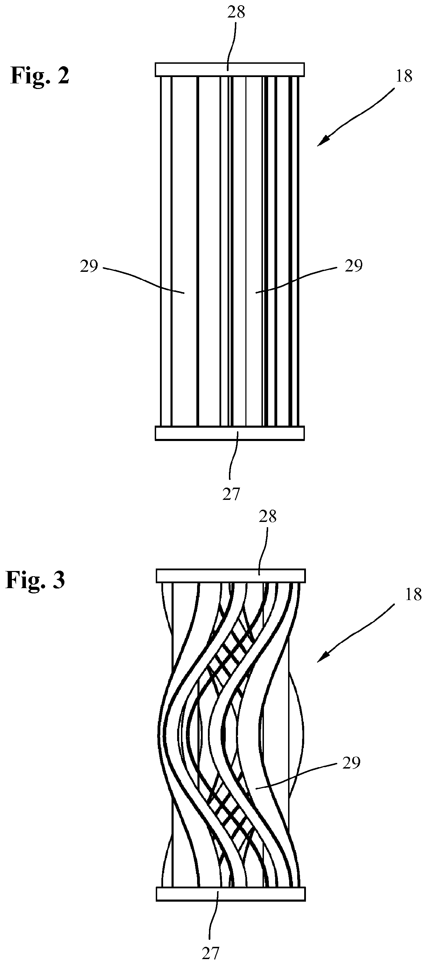

Die Federanordnung 17 besteht bei dem gezeigten Ausführungsbeispiel aus zwei in Reihe angeordneten, in den Figuren 2 und 3 gesondert dargestellten Federeinheiten 18, die jeweils mehrere zwischen zwei ringförmigen Federaufnahmen 27 bzw. 28 angeordnete und als Knickstäbe ausgebildete Federelemente 29 enthalten. Die stabförmigen Federelemente 29 können aus Metall, aus GFK, CFK oder aus einem anderen Faserverbundwerkstoff hergestellt sein und weisen einen rechteckigen Querschnitt auf. Sie können z.B. in entsprechenden Nuten an den Stirnseiten der ringförmigen Federaufhahmen 27 und 28 angeordnet sein. Wenn die Federeinheit 18 komprimiert wird, knicken die stabförmigen Federelemente 29 gegenüber der in Figur 2 gezeigten Ausgangsstellung ein und werden in der in Figur 3 gezeigten Weise gebogen. Bei der gezeigten Ausführung sind die stabförmigen Federelemente 29 in Umfangsrichtung so voneinander beabstandet und ausgerichtet, dass sich die Federelemente 29 auch im komprimierten Zustand der Federeinheit 18 nicht berühren. Die Federelemente 29 können radial oder unter einem Winkel zu einer Verbindungslinie zwischen dem Mittelpunkt und dem Rand der ringförmigen Federaufhahme 27 bzw. 28 geneigt angeordnet sein.

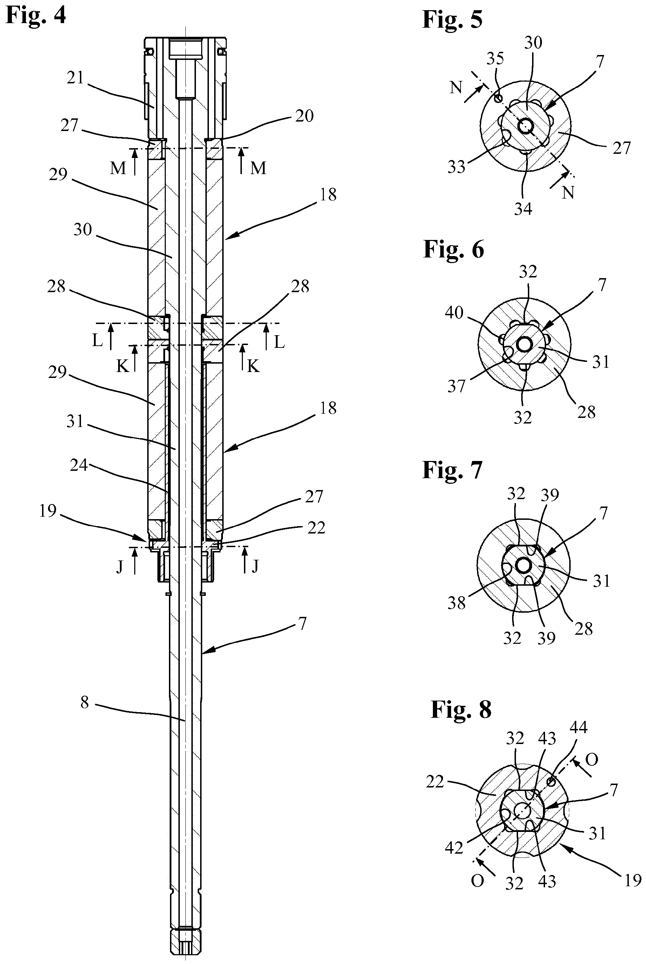

Wie aus den Figuren 4 bis 8 hervorgeht, weist die Spannstange 7 einen sich in Längsrichtung an den Ringbund 20 am hinteren Ende 21 der Spannstange 7 anschließenden mittleren zylindrischen Teil 30 und einen daran anschließenden, schlankeren vorderen Teil 31 mit gegenüberliegenden Abflachungen 32 auf. Der Außendurchmesser des hülsenförmigen Aufnahmeteils 24 des auf dem schlankeren vorderen Teil 31 der Spannstange 7 angeordneten Anlageelements 19 entspricht dem Außendurchmesser der Spannstange 7 im mittleren Teil 30. Die beiden Federeinheiten 18 sind identisch ausgestaltet und weisen jeweils eine erste Federaufhahme 27 und eine dazu unterschiedlich ausgestaltete zweite Federaufnahme 28 auf, wobei die auf dem mittleren zylindrischen Teil 30 der Spannstange 7 angeordnete hintere Federeinheit 18 gegenüber der auf dem schlankeren vorderen Teil 31 der Spannstange 7 angeordneten vorderen Federeinheit 18 um ihre Längsachse um 180° gedreht ist, so dass die beiden ersten Federaufnahmen 27 an dem Ringbund 20 am verbreiterten hinteren Ende 21 der Spannstange 7 bzw. an dem Ringflansch 22 des Anlageelements 19 anliegen und die beiden zweiten Federaufnahmen 28 aneinandergrenzend in der Mitte der Federanordnung 17 angeordnet sind.

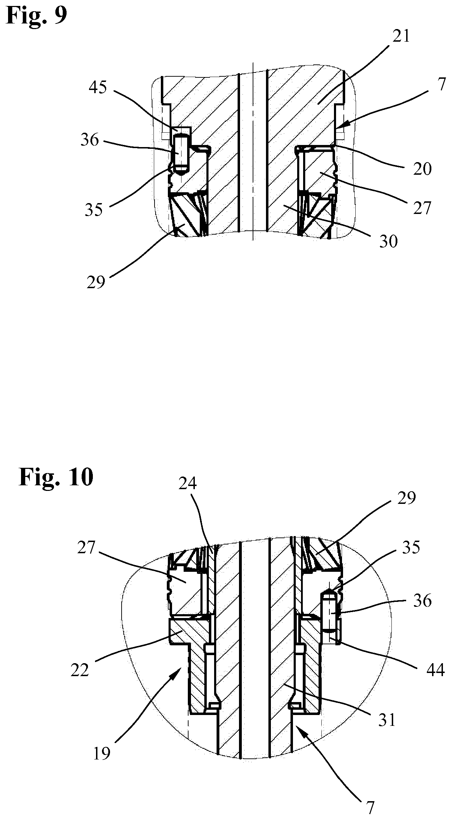

Aus Figur 5 ist ersichtlich, dass die ringförmige erste Federaufhahme 27 eine Durchgangsöffhung 33 mit einem an den Außendurchmesser des zylindrischen mittleren Teils der Spannstange 7 angepassten Innendurchmesser aufweist. An der Innenwand der Durchgangsöffhung 33 sind mehrere über den Umfang gleichmäßig verteilte und in Längsrichtung der Federaufhahme 27 verlaufende Nuten 34 für die Zuführung von Blasluft vorgesehen. Die erste Federaufnahme 27 weist ferner an einer Stirnseite eine Bohrung 35 für ein in den Figur 9 und 10 dargestelltes und hier als Sicherungsstift ausgebildetes Sicherungselement 36 auf.

In Figur 4 und den Querschnitten der Figuren 6 und 7 ist erkennbar, dass die ringförmige zweite Federaufhahme 28 an ihrer zu den Federelementen 29 weisenden Seite einen etwa bis zur Hälfte reichende Durchgang 37 mit einem kreisrunden Querschnitt und an ihrer zu der anderen Federaufhahme 28 weisenden Seite einen Durchgang 38 mit zwei parallelen Flächen 39 zur Anlage an den Abflachungen 32 am schlankeren vorderen Teil 31 der Spannstange 7 enthält. Dadurch ist die zweite Federaufnahme 28 axial beweglich und gegen Verdrehung gesichert auf der Spannstange 7 angeordnet.

Der in Figur 6 gezeigte Durchgang 37 der zweiten Federaufhahme 28 weist zur Führung der Spannstange 7 einen geringfügig größeren Innendurchmesser als der Außendurchmesser des schlankeren vorderen Teils 31 der Spannstange 7 auf. An der Innenwand des Durchgangs 37 sind auch hier mehrere über den Umfang gleichmäßig verteilte und in Längsrichtung der Federaufhahme 28 verlaufende Nuten 40 für die Zuführung von Blasluft vorgesehen.

Auch an der in Figur 7 gezeigten Durchgangsöffnung 38 der zweiten Federaufhahme 28 sind an den Enden der für die Verdrehsicherung vorgesehenen parallelen Flächen 39 nach innen gewölbte Nuten 41 für die Durchleitung von Blasluft vorgesehen. Durch die zur Anlage an den Abflachungen 32 gelangenden parallelen Flächen 39 sind auch die zweiten Federaufnahmen 28 gegen Verdrehung gegenüber Spannstange 7 und auch gegen Verdrehung gegeneinander gesichert.

Der in Figur 8 gezeigte Querschnitt durch das Anlageelement 19 zeigt, dass das Anlageelement 19 ebenfalls eine Durchgangsöffnung 42 mit zwei parallelen Flächen 43 zur Anlage an den Abflachungen 32 am schlankeren vorderen Teil 31 der Spannstange 7 enthält. Dadurch ist auch das Anlageelement 19 gegenüber der Spannstange 7 gegen Verdrehung gesichert. Zur verdrehgesicherten Verbindung mit der ersten Federaufhahme 27 weist das Anlageelement 19 in seinem Ringflansch 22 eine Durchgangsöffhung 44 für das in Figur 10 gezeigten Sicherungselement 36 auf. An der Außenseite des Ringflansches 22 des Anlageelements 19 sind vier in Umfangsrichtung um 90° versetze Rillen 45 für die Zuführung von Blasluft vorgesehen.

In Figur 9 ist die an dem Ringbund 20 der Spannstange 7 anliegende erste Federaufhahme 27 der auf dem mittleren zylindrischen Teil 30 der Spannstange 7 angeordneten hinteren Federeinheit 18 gezeigt. Das in der Bohrung 35 angeordnete stiftförmige Sicherungselement 36 greift in eine Vertiefung 46 an dem Ringbund 20 der Spannstange 7 ein. Dadurch ist die an dem Ringbund 20 der Spannstange 7 anliegende erste Federaufnahme 27 der hinteren Federeinheit 18 gegen Verdrehung gegenüber der Spannstange 7 gesichert.

In Figur 10 ist die an dem Anlageelement 19 anliegende und gegenüber der ersten Federaufhahme 27 von Figur 9 um ihre Längsachse um 180° gedrehte erste Federaufhahme 27 der auf dem hülsenförmigen Anlageteil 24 angeordneten vorderen Federeinheit 18 gezeigt. Hier greift das in der Bohrung 35 angeordnete stiftförmige Sicherungselement 36 in die Durchgangsöffhung 44 im Ringflansch 22 des Anlageelements 19 ein. Dadurch ist auch die an dem Ringflansch 22 des Anlageelements 19 anliegende erste Federaufhahme 27 der vorderen Federeinheit 18 gegen Verdrehung gegenüber der Spannstange 7 gesichert.

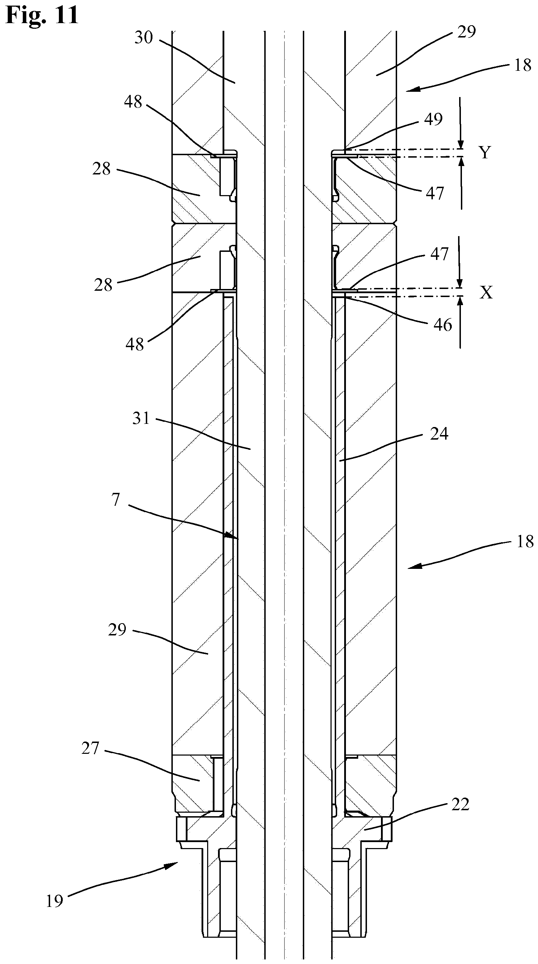

Figur 11 zeigt eine Detailansicht der Spannstange 7 in einer Lösestellung mit gleichmäßig komprimierten Federeinheiten 18. Aus dieser Darstellung ist ersichtlich, dass die Länge des hülsenförmigen Anlageteils 24 des am Maschinenteil 2 abgestützten Anlageelements 19 so gewählt ist, dass in der Lösestellung der Spannstange 7 und bei idealerweise gleichmäßiger Kompression beider Federeinheiten 18 zwischen einer Anschlagfläche 46 an dem freien Ende des hülsenförmigen Anlageteils 24 und einer Anschlagfläche 47 an einer Eindrehung 48 der ringförmigen zweiten Federaufhahme 28 der vorderen Federeinheit 18 ein kleiner Sicherheitsabstand X verbleibt. Auch die Länge des mittleren zylindrischen Teils 30 der Spannstange 7 ist so gewählt, dass in der Lösestellung der Spannstange 7 und bei idealerweise gleichmäßiger Kompression beider Federeinheiten 18 zwischen der Anschlagfläche 47 an der Eindrehung 48 der ringförmigen zweiten Federaufhahme 28 der hinteren Federeinheit 18 und einer ringförmigen Anschlagfläche 49 am Übergang vom mittleren zylindrischen Teils 30 zum schlankeren vorderen Teil 31 der Spannstange 7 ein kleiner Sicherheitsabstand Y verbleibt. Dadurch kann der Federhub bzw. die axiale Einfederung einer einzelnen Federeinheit 18 begrenzt und somit sichergestellt werden, dass bei einer durch die Verschiebung der Spannstange 7 in die Lösestellung bedingten Komprimierung der Federeinheiten 18 nicht nur eine der beiden Federeinheiten 18 zusammengedrückt wird.

Die Funktionsweise der vorstehend beschriebenen Spannvorrichtung wird im Folgenden anhand der Figur 1 erläutert.

In der in Figur 1 gezeigten Lösestellung der Spannvorrichtung wird die Spannstange 7 über die z.B. hydraulisch, pneumatisch oder elektrisch betätigte Löseeinheit 25 entgegen der Kraft der Federanordnung 17 in Richtung der Werkzeugaufhahme 3 gedrückt. Dabei werden die beiden Federelemente 18 entsprechend der Figur 3 komprimiert und die Zangenelemente 12 des Spannsatzes 11 können über den Spannkonus 10 und die Stützhülse 16 die in Figur 1 gezeigte, radial nach innen gedrückte Lösestellung einnehmen. In dieser Lösestellung sind die äußeren Enden 13 der Zangenelemente 12 außer Eingriff mit der Ringnut 14 in der Werkzeugaufnahme 3 und die Zangenelemente 12 geben die Werkzeugaufnahme 3 zum Werkzeugwechsel frei.

Wird dagegen die Druckhülse 26 der Löseeinheit 25 zurückgezogen, wird die Spannstange 7 durch die Federanordnung 17 eingezogen, wodurch die Zangenelemente 12 über den Spannkonus 10 radial nach außen gedrückt werden und der Werkzeugkegel 5 der Werkzeugaufhahme 3 über die Zangenelemente 12 in den Innenkegel 4 des Maschinenteils 2 eingezogen und gespannt wird.

Die erfindungsgemäße Spannvorrichtung ist nicht auf die vorstehend beschriebenen Ausführungsbeispiele beschränkt. So kann das erfindungsgemäße Spannsystem nicht nur bei Hohlkegelspannsystemen, sondern auch bei Steilkegelspannsystemen oder anderen Spannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange, als Spannsatz für Polygonschaft-Spannsysteme (PSC), als Spannsatz mit kugelförmigen Spannelementen oder als Spannsatz für andere Werkzeugwechselsysteme ausgeführt sein. Die Spannvorrichtung ist auch für die lösbare Halterung von Werkstücken geeignet. Außerdem können unterschiedliche Antriebe zur Betätigung der Löseeinheit zum Einsatz gelangen.

### Bezugszeichenliste

- 1: Spannvorrichtung
- 2: Maschinenteil
- 3: Werkzeugaufhahme
- 4: Innenkegel
- 5: Werkzeugkegel
- 6: Durchgangsöffnung
- 7: Spannstange
- 8: Durchgangsbohrung
- 9: vorderes Ende der Spannstange
- 10: Spannkonus
- 11: Spannsatz
- 12: Zangenelemente
- 13: äußere Enden der Zangenelemente
- 14: Ringnut
- 15: innere Enden der Zangenelemente
- 16: Stützhülse
- 17: Federanordnung
- 18: Federeinheit
- 19: Anlageelement
- 20: Ringbund
- 21: hinteres Ende der Spannstange
- 22: Ringflansch
- 23: Ringabsatz
- 24: hülsenförmiges Anlageteil
- 25: Löseeinheit
- 26: Druckhülse
- 27: erste Federaufhahme
- 28: zweite Federaufnahme
- 29: Federelement
- 30: mittlerer zylindrischer Teil der Spannstange
- 31: schlankerer vorderer Teil der Spannstange
- 32: Abflachungen
- 33: Durchgangsöffnung
- 34: Nuten
- 35: Bohrung
- 36: Sicherungselement
- 37: Durchgang mit kreisrundem Querschnitt
- 38: Durchgang mit zwei parallelen Flächen
- 39: Flächen
- 40: Nuten
- 41: Nuten
- 42: Durchgang
- 43: Flächen
- 44: Durchgangsöffnung
- 45: Rillen
- 46: Anschlagfläche
- 47: Anschlagfläche
- 48: Vertiefung
- 49: Anschlagfläche

## Patentansprüche

1. Spannvorrichtung (1) zum Spannen eines Werkstücks oder eines Werkzeugs bzw. einer Werkzeugaufhahme (3) an einem Maschinenteil (2) einer Werkzeugmaschine, mit einer axial (4) verschiebbaren Spannstange (7), einem über die Spannstange (7) zwischen einer Spannstellung und einer Lösestellung bewegbaren Spannsatz (11), einer der Spannstange (7) zugeordneten Federanordnung (17) zur Erzeugung der Spann- bzw. Einzugskraft des Spannsatzes (11) und einer Löseeinheit (25), durch welche der Spannsatz (11) über die Spannstange (7) entgegen der Kraft der Federanordnung (17) in die Lösestellung bewegbar ist, wobei die Federanordnung (17) mindestens eine Federeinheit (18) mit mehreren zwischen einer ersten und zweiten Federaufnahme (27, 28) angeordneten biegsamen Federelementen (29) umfasst,
**dadurch gekennzeichnet, dass** die ersten und zweiten Federaufiiahmen (27, 28) gegenüber der Spannstange (7) gegen Verdrehung gesichert sind.

2. Spannvorrichtung nach Anspruch 1, **dadurch gekennzeichnet, dass** die mindestens eine Federeinheit (18) mehrere in Umfangrichtung voneinander beabstandete und mit ihren Enden in den Federaufuahmen (27, 28) fest oder gelenkig angeordnete, stabförmige Federelemente (29) enthält.

3. Spannvorrichtung nach Anspruch 1 oder 2, **dadurch gekennzeichnet, dass** die Federanordnung (17) mehrere in Reihe angeordnete Federeinheiten (18) enthält, die gegeneinander gegen Verdrehung gesichert sind.

4. Spannvorrichtung nach einem der Ansprüche 1 bis 3, **dadurch gekennzeichnet, dass** die erste Federaufnahme (27) ein Sicherungselement (36) für eine gegen Verdrehung gesicherte Anordnung der ersten Federaufnahme (27) gegenüber der Spannstange (7) enthält.

5. Spannvorrichtung nach Anspruch 4, **dadurch gekennzeichnet, dass** das Sicherungselement (36) in einer Bohrung (35) an einer Stirnseite der ersten Federaufnahme (27) angeordnet ist.

6. Spannvorrichtung nach einem der Ansprüche 1 bis 5, **dadurch gekennzeichnet, dass** die zweite Federaufnahme (27) eine Innenkontur (38, 39) zum formschlüssigen Eingriff mit einer entsprechenden Außenkontur (31, 32) der Spannstange (7) enthält.

7. Spannvorrichtung nach Anspruch 6, **dadurch gekennzeichnet, dass** die Innenkontur (38, 39) an der zweiten Federaufhahme (27) durch einen Durchgang (38) mit zwei parallelen Flächen (39) und die entsprechende Außenkontur (31, 32) der Spannstange (7) durch Abflachungen (32) an einem schlankeren vorderen Teil (31) des Spannstange (7) gebildet wird.

8. Spannvorrichtung nach einem der Ansprüche 1 bis 7, **dadurch gekennzeichnet, dass** die Axialverschiebung mindestens einer Federaufnahme (28) relativ zur Spannstange (7) beim Zusammendrücken der mindestens einen Federeinheit (18) durch einen Anschlag (46, 49) begrenzt wird.

9. Spannvorrichtung nach Anspruch 8, **dadurch gekennzeichnet, dass** der Anschlag (46, 49) durch eine Anschlagfläche (46) eines hülsenförmigen Anlageteils (24) an einem auf der Spannstange (7) gegen Verdrehung gesichert angeordneten Anlageelement (19) und /oder durch eine Anschlagfläche (49) an einen mittleren Teil (31) der Spannstange (7) gebildet wird.

10. Spannvorrichtung nach Anspruch 9, **dadurch gekennzeichnet, dass** die Federanordnung (17) eine auf dem hülsenförmigen Anlageteil (24) der Anlageelements (19) angeordnete vordere Federeinheit (18) und eine auf dem mittleren Teil (31) der Spannstange (7) angeordnete hintere Federeinheit (18) enthält.

11. Spannvorrichtung nach Anspruch 9 oder 10, **dadurch gekennzeichnet, dass** die Federanordnung (17) zwischen einem Ringbund (20) an einem verbreiterten hinteren Ende (21) der Spannstange (7) und dem auf einem schlankeren vorderen Teil (31) der Spannstange (7) angeordneten Anlageelement (19) angeordnet sind.

12. Spannvorrichtung nach einem der Ansprüche 1 bis 11, **dadurch gekennzeichnet, dass** die Löseeinheit (25) hydraulisch, pneumatisch oder elektrisch betätigbar ist.

13. Bearbeitungseinheit einer Werkzeugmaschine mit einer in einem Maschinenteil (2) integrierten Spannvorrichtung (1), **dadurch gekennzeichnet, dass** die Spannvorrichtung nach einem der Ansprüche 1 bis 12 ausgebildet ist.

14. Bearbeitungseinheit nach Anspruch 13, **dadurch gekennzeichnet, dass** das Maschinenteil (2) eine drehbar gelagerte und durch einen Antrieb drehbare Arbeitsspindel ist.

## Claims

1. Clamping device (1) for clamping a workpiece or a tool or a tool holder (3) to a machine part (2) of a machine tool, having an axially (4) displaceable tension rod (7), a clamping assembly (11) which can be moved via the tension rod (7) between a clamped position and a released position, a spring arrangement (17) assigned to the tension rod (7) to generate the clamping force or retraction force of the clamping assembly (11) and a release unit (25), by means of which the clamping assembly (11) can be moved into the released position against the force of the spring arrangement (17)via the tension rod (7), wherein the spring arrangement (17) comprises at least one spring unit (18) having several flexible spring elements (29) arranged between a first and second spring holder (27, 28), **characterised in that** the first and second spring holders (27, 28)are secured against rotation with respect to the tension rod (7).

2. Clamping device according to claim 1, **characterised in that** the at least one spring unit (18) contains several rod-like spring elements (29) spaced from one another peripherally and arranged firmly or in hinged manner with their ends in the spring holders (27, 28).

3. Clamping device according to claim 1 or 2, **characterised in that** the spring arrangement (17) contains several spring units (18) arranged in series which are secured against rotation with respect one another.

4. Clamping device according to one of claims 1 to 3, **characterised in that** the first spring holder (27) contains a securing element (36) for an arrangement of the first spring holder (27) secured against rotation with respect to the tension rod (7).

5. Clamping device according to claim 4, **characterised in that** the securing element (36) is arranged in a bore (35) on an end-face side of the first spring holder (27).

6. Clamping device according to one of claims 1 to 5, **characterised in that** the second spring holder (27) contains an inner contour (38, 39) for positive engagement with a corresponding outer contour (31, 32) of the tension rod (7).

7. Clamping device according to claim 6, **characterised in that** the inner contour (38, 39) on the second spring holder (27) is formed by a passage (38) having two parallel surfaces (39) and the corresponding outer contour (31, 32) of the tension rod (7) by flattened sections (32) on a narrower front part (31) of the tension rod (7).

8. Clamping device according to one of claims 1 to 7, **characterised in that** the axial displacement of at least one spring holder (28) relative to the tension rod (7) during compression of the at leastone spring unit (18) is limited by a stop (46, 49).

9. Clamping device according to claim 8, **characterised in that** the stop (46, 49) is formed by a stop surface (46) of a sleeve-like bearingpart (24) on a bearing element (19) arranged secured against rotation on the tension rod (7) and/or by a stop surface (49) on a central part (31) of the tension rod (7).

10. Clamping device according to claim 9, **characterised in that** the spring arrangement (17) contains a front spring unit (18) arranged on the sleeve-likebearing part (24) of the bearing element (19) and a rear spring unit (18) arranged on the central part (31) of the tension rod (7).

11. Clamping device according to claim 9 or 10, **characterised in that** the spring arrangement (17) is arranged between a collar (20) on a widened rear end (21) of the tension rod (7) and the bearingelement (19) arranged on a narrower front part (31) of the tension rod (7).

12. Clamping device according to one of claims 1 to 11, **characterised in that** the release unit (25) can be actuated hydraulically, pneumatically or electrically.

13. Machining unit of a machine tool having a clamping device (1) integrated in a machine part (2), **characterised in that** the clamping device is constructed according to one of claims 1 to 12.

14. Machining unit according to claim 13, **characterised in that** the machine part (2) is a work spindle which is rotatably mounted and rotable by a drive.

## Revendications

1. Dispositif de serrage (1) servant à serrer une pièce ou un outil ou un porte-outil (3) au niveau d'une partie de machine (2) d'une machine-outil, avec une tige de serrage (7) pouvant être coulissée de manière axiale (4), un set de serrage (11) pouvant être déplacé par l'intermédiaire de la tige de serrage (7) entre une position de serrage et une position de desserrage, un ensemble formant ressort (17) associé à la tige de serrage (7), servant à générer la force de serrage ou la force d'introduction par traction du set de serrage (11), et une unité de desserrage (25), par laquelle le set de serrage (11) peut être déplacé par l'intermédiaire de la tige de serrage (7) dans la position de desserrage à l'encontre de la force de l'ensemble formant ressort (17), dans lequel
l'ensemble formant ressort (17) comprend au moins une unité de ressort (18) avec plusieurs éléments de ressort (29) flexibles disposés entre un premier porte-ressort et un deuxième porte-ressort (27, 28),
**caractérisé en ce que** les premiers et deuxièmes porte-ressort (27, 28) sont bloqués contre toute rotation par rapport à la tige de serrage (7).

2. Dispositif de serrage selon la revendication 1, **caractérisé en ce que** l'au moins une unité de ressort (18) contient plusieurs éléments de ressort (29) en forme de barre espacés les uns des autres dans la direction périphérique et disposés de manière solidaire ou articulée par leurs extrémités dans les porte-ressort (27, 28).

3. Dispositif de serrage selon la revendication 1 ou 2, **caractérisé en ce que** l'ensemble formant ressort (17) contient plusieurs unités de ressort (18) disposées en rangée, lesquelles sont bloquées contre toute rotation les unes par rapport aux autres.

4. Dispositif de serrage selon l'une quelconque des revendications 1 à 3, **caractérisé en ce que** le premier porte-ressort (27) contient un élément de blocage (36) pour unedispositionavec un blocagecontre toute rotation du premier porte-ressort (27) par rapport à la tige de serrage (7).

5. Dispositif de serrage selon la revendication 4, **caractérisé en ce que** l'élément de blocage (36) est disposé dans un alésage (35) au niveau d'un côté frontal du premier porte-ressort (27).

6. Dispositif de serrage selon l'une quelconque des revendications 1 à 5, **caractérisé en ce que** le deuxième porte-ressort (27) contient un contour intérieur (38, 39) servant à venir en prise par complémentarité de forme avec un contour extérieur (31,32) correspondant de la tige de serrage (7).

7. Dispositif de serrage selon la revendication 6, **caractérisé en ce que** le contour intérieur (38, 39) est formé au niveau du deuxième porte-ressort (27) par un passage (38) avec deux surfaces parallèles (39), et le contour extérieur (31, 32) correspondant de la tige de serrage (7) est formé par des zones aplaties (32) au niveau d'une partie avant (31) plus fine de la tige de serrage (7).

8. Dispositif de serrage selon l'une quelconque des revendications 1 à 7, **caractérisé en ce que** le coulissement axial d'au moins un porte-ressort (28) par rapport à la tige de serrage (7) est limité par une butée (46, 49) lors de la compression de l'au moins une unité de ressort (18).

9. Dispositif de serrage selon la revendication 8, **caractérisé en ce que** la butée (46, 49) est formée par une surface de butée (46) d'une partie d'appui (24) en forme de douille au niveau d'un élément d'appui (19) disposé de manière bloquée contre toute rotation sur la tige de serrage (7) et/ou par une surface de butée (49) au niveau d'une partie (31) centrale de la tige de serrage (7).

10. Dispositif de serrage selon la revendication 9, **caractérisé en ce que** l'ensemble formant ressort (17) contient une unité de ressort avant (18) disposée sur la partie d'appui (24) en forme de douille de l'élément d'appui (19) et une unité de ressort arrière (18) disposée sur la partie (31) centrale de la tige de serrage (7).

11. Dispositif de serrage selon la revendication 9 ou 10, **caractérisé en ce que** l'ensemble formant ressort (17) est disposé entre un collet annulaire (20) au niveau d'une extrémité arrière (21) élargie de la tige de serrage (7) et l'élément d'appui (19) disposé sur une partie avant (31) plus fine de la tige de serrage (7) .

12. Dispositif de serrage selon l'une quelconque des revendications 1 à 11, **caractérisé en ce que** l'unité de desserrage (25) peut être actionnée de manière hydraulique, pneumatique ou électrique.

13. Unité d'usinage d'une machine-outil avec un dispositif de serrage (1) intégré dans une partie de machine (2), **caractérisée en ce que** le dispositif de serrage est réalisé selon l'une quelconque des revendications 1 à 12.

14. Unité d'usinage selon la revendication 13, **caractérisée en ce que** la partie de machine (2) est une broche de travail montée de manière à pouvoir tourner et pouvant être tournée par un entraînement.
